# EUROPEAN PATENT APPLICATION

(11) **EP 3 112 631 A1**
(43) Date of publication of application: **04.01.2017**
(21) Application number: 15174295.4
(22) Date of filing: 29.06.2015
(51) Int. Cl.: F02B 37/00, F02B 37/007, F02B 37/013, F02B 37/10, F02B 37/18

(54) **AIR SUPPLY ARRANGEMENT, INTERNAL COMBUSTION ENGINE, METHOD FOR ADDITIONAL AIR SUPPLY OF AN INTERNAL COMBUSTION ENGINE AND METHOD OF REFITTING AN INTERNAL COMBUSTION ENGINE**

(71) Applicant: Winterthur Gas & Diesel Ltd., 8401 Winterthur (CH)
(72) Inventor: Schneiter, Dominik, 8308 Illnau (CH)
(74) Representative: Hepp Wenger Ryffel AG

(57) **Abstract**

An air supply arrangement (1) for an internal combustion engine (10) being equipped with at least a main turbocharger (12), in particular a two stroke engine, comprises an exhaust inlet (2) for introducing exhaust from the internal combustion engine (10) into the air supply device (1), the exhaust inlet (2) being in fluid connection to a turbine (3, 3') of at least one auxiliary turbocharger (4, 4') and an exhaust outlet (5) for diverting the exhaust from the turbine (3, 3') of the at least one auxiliary turbocharger (4, 4'). A fresh air inlet (6) is in fluid connection to a compressor (7, 7') of the at least one auxiliary turbocharger (4, 4').The compressor (7, 7') of the at least one auxiliary turbocharger (4, 4') is drivable by an auxiliary motor (8, 8'), in particular an auxiliary electromotor.

## Description

The invention is directed to an air supply arrangement for an internal combustion engine, an internal combustion engine, a method for additional air supply of an internal combustion engine and a method for refitting an internal combustion engine according to a preamble of the independent claims.

Internal combustion engines, especially for large vessels, usually comprise one or more turbochargers for pressurising intake air.

EP 2 639 440 shows an internal combustion engine comprising a gas purification device in which exhaust is led over a turbine of a turbocharger and back over the compressor of the same turbocharger back into the engine. The turbocharger is additionally equipped with a generator, to generate electric energy from superfluous exhaust energy.

Especially in low load situations, were not sufficient exhaust is available to drive the turbocharger, additional blowers are introduced to reach a sufficiently high pressure level in the scavenge air receiver of the combustion engine. Those auxiliary blowers need external electric energy.

It is therefore an object of the present invention to obviate the drawbacks of the prior art and especially create an air supply arrangement, an internal combustion engine, a method for additional air supply and method for refitting an internal combustion engine which leads to the possibility of enhancing the efficiency of the internal combustion engine.

The object is achieved by an air supply arrangement, an internal combustion engine, a method for additionally air supply and a method for refitting an internal combustion engine according to the characterising features of the independent claims.

In particular, the object is achieved by an air supply arrangement for an internal combustion engine, which engine is equipped with at least a main turbocharger, in particular a two-stroke engine comprising an exhaust inlet for introducing exhaust from the internal combustion engine into the air supply device. The exhaust inlet is in fluid connection to a turbine of at least one auxiliary turbocharger. The arrangement further comprises an exhaust outlet for diverting the exhaust from the turbine of the at least one auxiliary turbocharger. The arrangement comprises a fresh air inlet being in fluid connection to a compressor of the at least one auxiliary turbocharger. The compressor of the at least one auxiliary turbocharger is drivable by an auxiliary motor, in particular an auxiliary electro motor.

Such an arrangement leads to a more efficient supply of air to an internal combustion engine due to the possibility of either using exhaust or a different external energy for driving the auxiliary turbocharger. No more additional blower is needed.

The air supply device can comprise two auxiliary turbochargers.

By applying two auxiliary turbochargers the efficiency, in particular the EEDI (energy efficiency design index) balance, is optimised.

The compressor of the at least one auxiliary turbocharger can comprise a fresh air outlet, which preferably is fluidly connectable to the scavenge air receiver of the internal combustion engine.

A fresh air outlet leads to the possibility of leading fresh air from the turbocharger compressor to the scavenge air receiver and thereby providing fresh air at a sufficient pressure level.

The auxiliary motor can be decouplable from the auxiliary turbocharger, in particular when sufficient exhaust from the internal combustion engine is available for driving the turbine of the auxiliary turbocharger. Preferably, the auxiliary motor is decoupled by a hydraulic torque converter.

This way the auxiliary motor is only functionally connected to the turbocharger when it is needed, hence in case of low loads of the internal combustion engine. When the auxiliary motor is not needed anymore, it can be decoupled and has no more influence on the efficiency of the engine.

Preferably, the auxiliary motor is arranged on the same shaft as compressor and turbine of the turbocharger. The coupling and/or decoupling of the auxiliary motor can be controlled by a control unit, preferably based on the load of the engine and hence the amount and/or energy available by exhaust.

The exhaust outlet can be fluidly connectable to a main turbocharger of an internal combustion engine.

This arrangement leads to a simpler layout of the air supply arrangement and a possibility of using the remaining energy of the exhaust downstream the auxiliary turbocharger for the main turbocharging of the internal combustion engine. This has a positive effect on the efficiency of the vessel.

The air supply arrangement can additionally comprise a gas treatment device such as one or more coolers, water mist catchers and/or flaps for treating the incoming fresh air downstream the compressor of the main turbocharger. Preferably, all those devices are installed upstream the auxiliary turbochargers in the fresh air stream. Additionally, the air supply arrangement can comprise one or more scrubbers in case an exhaust recirculation is provided for.

The auxiliary motor or motors can additionally be used as generators in case enough exhaust for driving the auxiliary turbocharger is present.

The exhaust inlet can comprise a valve, preferably a butterfly valve. The valve can alternatively be a controllable valve. The application of a valve in the exhaust inlet leads to the possibility to protect the auxiliary turbocharger in case of high loads of the internal combustion engine.

The object is further achieved by an internal combustion engine, preferably a two-stroke engine for a large vessel, which comprises at least one main turbocharger, an engine exhaust outlet and a scavenge air receiver. The engine exhaust outlet is in fluid connection with a main turbine of the main turbocharger and a main compressor of the main turbocharger is in fluid connection with a scavenge air receiver. This leads to fresh air being introducible into the scavenge air receiver. The internal combustion engine comprises an air supply arrangement as previously described.

Such an internal combustion engine leads to a highly efficient engine, in particular when used for a large vessel.

The internal combustion engine can additionally comprise a gas treatment device such as one or more coolers, water mist catchers and/or flaps for treating the incoming fresh air downstream the compressor of the main turbocharger. Preferably, all those devices are installed upstream the auxiliary turbochargers in the fresh air stream. Additionally, it is possible to install an exhaust gas recirculation for recirculating a part of the exhaust back into the engine. The exhaust gas recirculation can be a high pressure or a low pressure exhaust gas recirculation system. In case of an exhaust gas recirculation system installed, the fresh air entering the air supply device can comprise some exhaust to a certain extent, which does not exceed 50%, preferably not exceed 40%.

The object is further achieved by a method for additional air supply of an internal combustion engine, preferably a two-stroke engine for a large vessel, comprising at least one main turbocharger and an air supply arrangement as previously described. The method comprises the step of driving a compressor of at least one auxiliary turbocharger with an auxiliary motor, preferably an electromotor, for introducing fresh air into the scavenge air receiver in a low load mode.

Preferably, the method comprises at least two modes, a low load mode and a high load mode. In the low load mode the auxiliary turbocharger or turbochargers are driven by an auxiliary motor, in the high load mode the auxiliary turbocharger or turbochargers are driven by exhaust from the internal combustion engine.

Such a method leads to efficient air supply of the internal combustion engine of every load situation.

The transition from low loads mode to high load mode at least comprises the step of decoupling the auxiliary motor from the compressor of the auxiliary turbocharger.

The auxiliary motor can be decoupled from the auxiliary turbocharger and the auxiliary turbocharger can be driven with exhaust when sufficient exhaust is produced by the internal combustion engine.

By decoupling the auxiliary motor, the turbocharger does not lose any energy for driving the auxiliary motor when not needed, even if the auxiliary motor is just running in idle.

This leads to a high efficiency of the air supply of the internal combustion engine.

The exhaust from the at least one auxiliary turbocharger can be lead to the main turbocharger.

This way the remaining energy of the exhaust downstream the auxiliary turbocharger is still used in the main turbocharger. This leads to a higher efficiency of the whole process.

The object is further achieved by a method for refitting an internal combustion engine by installing an air supply arrangement as previously described in an internal combustion engine of a large vessel.

By refitting an internal combustion engine the efficiency of the engine is enhanced.

The invention is in the following described by embodiments by means of figures. It shows:
- Figure 1:: A schematic view of an internal combustion engine,
- Figure 2:: A schematic view of an air supply arrangement.

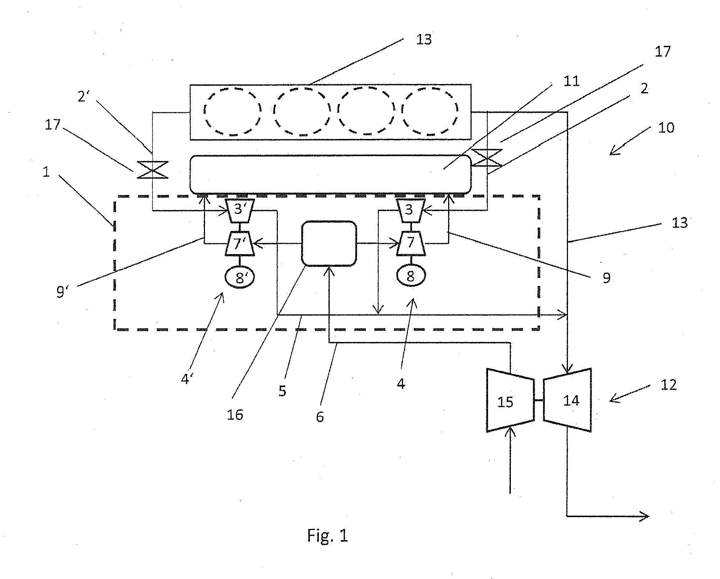

Figure 1 shows a schematic view of an internal combustion engine 10 comprising an air supply arrangement 1. The internal combustion engine 10 comprises an engine exhaust outlet 13, from which exhaust from a combustion process is led to a main turbocharger 12. The main turbocharger 12 comprises a main turbine 14 and a main compressor 15. The exhaust from the combustion process drives the main turbine 14. The compressor 15 compresses fresh air, which is led to a fresh air inlet 6 of the air supply arrangement 1. The air supply arrangement 1 comprises an exhaust inlet 2, 2' and two auxiliary turbocharges 4, 4'. The auxiliary turbochargers 4, 4' each comprise a turbine 3, 3' which is driven by the exhaust from the internal combustion engine 10. Each auxiliary turbocharger 4, 4' comprises a compressor 7, 7' which compresses fresh air. The compressed fresh air from compressor 7, 7' is led through fresh air outlet 9, 9' into scavenge air receiver 11. The fresh air entering the compressor 7, 7' is treated by a gas treatment device 16 before entering the compressor 7, 7'. The gas treatment device 16 comprises a water mist catcher and a scavenge air cooler. Preferably, the gas treatment device 16 additionally comprises flaps for diverting the fresh air. Each auxiliary turbocharger 4, 4' comprises an auxiliary motor 8, 8', which is arranged on the turbocharger shaft of each auxiliary turbocharger 4, 4'. The auxiliary motor 8, 8' is an electro motor and is capable of driving the compressor 7, 7'. The auxiliary motor 8, 8' is decouplable from the compressor 7, 7'. Under low load conditions the compressor 7, 7' of the auxiliary turbocharger 4, 4' is driven by electro motor 8, 8' to keep the scavenge air mass flow sufficiently high. As soon as sufficient exhaust is available, auxiliary electro motor 8, 8' is decoupled from the turbocharger 4, 4' and the turbocharger 4, 4' is driven by the turbine 3, 3' under high load mode. The coupling and/or decoupling of the auxiliary motor 8 8' can be controlled by a control unit. This combination leads to an extremely efficient air supply device and internal combustion engine and in particular to the optimisation of the EEDI balance of the vessel. Optionally, valves 17 are installed at exhaust inlet 2, 2' to protect the auxiliary turbocharger 4, 4' in cases of high loads of the internal combustion engine 10. The valves 17 can be controllable valves, preferably the valves 17 are butterflyvalves.

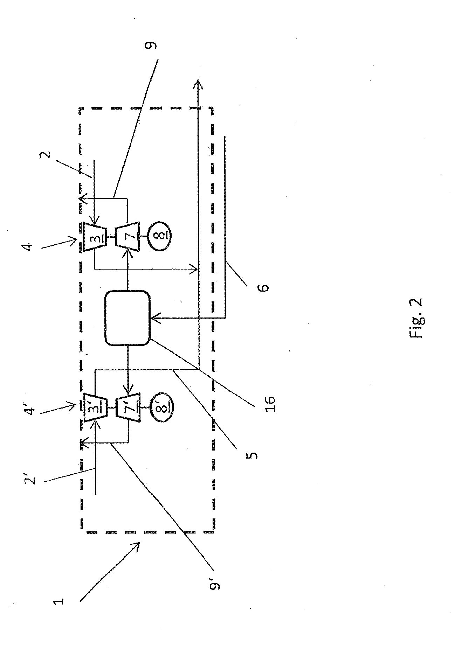

Figure 2 shows a schematic view of an air supply arrangement 1. The air supply arrangement 1 can be installed or refitted in an internal combustion engine 10. The air supply arrangement 1 comprises an exhaust inlet 2, 2' diverting exhaust from an exhaust outlet of an internal combustion engine to a turbine 3, 3' of two auxiliary turbochargers 4, 4'. Each auxiliary turbocharger 4, 4' comprises a turbine 3, 3' and a compressor 7, 7'. Additionally each auxiliary turbocharger 4, 4' comprises an auxiliary motor 8, 8'. The auxiliary motor 8, 8' is an electro motor and capable of driving the compressor 7, 7'. The compressor 7, 7' is driven by the electro motor 8, 8' under low load conditions. As soon as sufficient exhaust for driving the turbochargers 4, 4' by exhaust is available, the auxiliary motor 8, 8' is decoupled from the compressor 7, 7'. The air supply arrangement 1 comprises a fresh air inlet 6 thru which fresh air is introduced into the air supply arrangement, in particular into the compressor 7, 7'. Additionally, the fresh air is led through gas treatment device 16 before entering compressor 7, 7'. The gas treatment device comprises a water mist catcher and a scavenge air cooler to create optimal conditions of the air entering the compressor 7, 7'. Under a high load mode exhaust enters the turbine 3, 3' through exhaust inlet 2, 2' and is diverted from turbine 3, 3' through exhaust outlet 5. The fresh air enters the air supply device 1 through fresh air inlet 6 and is diverted from compressor 7, 7' through fresh air outlet 9, 9'. Such an air supply arrangement leads to a highly efficient supply of a combustion engine with fresh air under all load conditions.

## Claims

1. Air supply arrangement (1) for an internal combustion engine (10) being equipped with at least a main turbocharger (12), in particular a two stroke engine, comprising an exhaust inlet (2) for introducing exhaust from the internal combustion engine (10) into the air supply device (1), the exhaust inlet (2) being in fluid connection to a turbine (3, 3') of at least one auxiliary turbocharger (4, 4'), an exhaust outlet (5) for diverting the exhaust from the turbine (3, 3') of the at least one auxiliary turbocharger (4, 4'), a fresh air inlet (6) being in fluid connection to a compressor (7, 7') of the at least one auxiliary turbocharger (4, 4') **characterized in that** the compressor (7, 7') of the at least one auxiliary turbocharger (4, 4') is drivable by an auxiliary motor (8, 8'), in particular an auxiliary electromotor.

2. Air supply arrangement (1) according to claim 1, **characterized in that** the air supply device (1) comprises two auxiliary turbochargers (4, 4').

3. Air supply arrangement (1) according to any one of the preceding claims, **characterized in that** the compressor (7, 7') of the at least one auxiliary turbocharger (4, 4') comprises a fresh air outlet (9, 9'), which preferably is fluidly connectable to a scavenger air receiver (11) of the internal combustion engine (10).

4. Air supply arrangement (1) according to any one of the preceding claims, **characterized in that** the auxiliary motor (8, 8') is decouplable from the auxiliary turbocharger (4, 4'), in particular when sufficient exhaust from the internal combustion engine (10) is available for driving the turbine (3, 3') of the auxiliary turbocharger (4, 4').

5. Air supply arrangement (1) according to any one of the preceding claims, **characterized in that** the exhaust outlet (5) is fluidly connectable to a main turbocharger (12) of an internal combustion engine (10).

6. Air supply arrangement (1) according to any one of the preceding claims, **characterized in that** the exhaust inlet (2,2') comprises a valve (17), preferably a butterfly valve.

7. Internal combustion engine (10), preferably a two-stroke engine for a large vessel, comprising at least one main turbocharger (12) an engine exhaust outlet (13) and a scavenge air receiver (11), wherein the engine exhaust outlet (13) is in fluid connection with a main turbine (14) of the main turbocharger (12) and a main compressor (15) of the main turbocharger (12) is in fluid connection with the scavenge air receiver (11) such that fresh air is introducible into the scavenge air receiver (11) **characterized in that** the internal combustion engine (10) comprises an air supply arrangement (1) according to any one of claims 1 to 6.

8. Method for additional air supply of an internal combustion engine (10), preferably a two-stroke engine for a large vessel, comprising at least one main turbocharger (12) and an air supply arrangement (1) according to any one of claims 1 to 6, comprising the step of driving a compressor (7, 7') of at least one auxiliary turbocharger (4, 4') with an auxiliary motor (8, 8'), preferably an electromotor, for introducing fresh air into the scavenge air receiver (11) in a low load mode.

9. Method according to claim 8, **characterized in that** the auxiliary motor (8, 8') is decoupled from the auxiliary turbocharger (4, 4') and the auxiliary turbocharger (4, 4') is driven with exhaust when sufficient exhaust is produced by the internal combustion engine (10).

10. Method according to any one of claims 8 or 9, **characterized in that** exhaust from the at least one auxiliary turbocharger (4, 4') is led to the main turbocharger (12).

11. Method for refitting an internal combustion engine (10) by installing an air supply arrangement (1) according to any one of claims 1 - 6 in an internal combustion engine (10) of a large vessel.
